# EUROPÄISCHE PATENTSCHRIFT

(11) **EP 3 827 232 B1**
(45) Veröffentlichungstag und Bekanntmachung des Hinweises auf die Patenterteilung: **24.05.2023**
(21) Anmeldenummer: 19730316.7
(22) Anmeldetag: 11.06.2019
(51) Int. Cl.: G01K 5/48, G01K 7/36, G01K 7/32

(54) **VORRICHTUNG ZUM DETEKTIEREN EINES TEMPERATURANSTIEGS BEI EINEM ELEKTROMOTOR**
APPARATUS FOR DETECTING A RISE IN TEMPERATURE IN AN ELECTRIC MOTOR
DISPOSITIF DE DÉTECTION D'UNE AUGMENTATION DE TEMPÉRATURE DANS UN MOTEUR ÉLECTRIQUE

(30) Priorität: 25.10.2018 DE 102018126713
(43) Veröffentlichungstag der Anmeldung: 02.06.2021
(73) Patentinhaber: ebm-papst Mulfingen GmbH & Co. KG, 74673 Mulfingen (DE)
(72) Erfinder: WYSTUP, Ralph, 74653 Künzelsau (DE); HUMM, Markus, 74679 Weißbach (DE); ROSENBERGER, Daniel, 74653 Künzelsau (DE)
(74) Vertreter: Staeger & Sperling Partnerschaftsgesellschaft mbB
(86) Internationale Anmeldenummer: PCT/EP2019/065180
(87) Internationale Veröffentlichungsnummer: WO 2020/083537

(56) Entgegenhaltungen:
- JP-A- S61 148 804
- KR-A- 20120 066 510
- US-B1- 9 618 396

## Beschreibung

Die Erfindung betrifft eine Vorrichtung zum Detektieren eines Temperaturanstiegs bei einem Elektromotor zum Schutz eines Geräts, insbesondere des Elektromotors selbst vor einer thermischen Überlastung.

Aus dem Stand der Technik ist bekannt, dass zum Schutz vor thermischer Motor-überlastung neben einem Überlastrelais, das anhand der Motorstromaufnahme eine Überlastung des Motors erkennt, z. B. auch Thermistorschutzschaltungen verwendet werden, die die Temperatur einer Motorwicklung detektieren und auswerten. Zur Erfassung der Temperatur der Motorwicklung kommen dabei verschiedene Temperaturdetektorelemente bzw. Sensoren, wie z. B. Temperaturfühler, insbesondere PTC-Thermistoren (PTC: positive temperature coefficient), PTIOO-Fühler und KTY-Fühler (mit PTC-Charakteristik), deren elektrischer Widerstand sich abhängig von der detektierten Temperatur ändert zur Anwendung. Die Funktionsweise des Übertemperaturschutzes aus den im Stand der Technik bekannten Lösungen mit einem PTC-Fühler basiert auf dem Prinzip, dass zwei temperaturabhängige Widerstandsbereiche verwendet werden. Es liegt der Widerstand eines solchen Temperaturdetektorelementes in einem ersten Widerstandsbereich, so lange sich die Motorwicklung in einem Temperaturbereich befindet, der unproblematisch ist. Der zweite Widerstandsbereich, dessen Widerstandswerte beispielsweise größer sind als die des ersten Widerstandsbereichs, entspricht dann einer Temperatur über einem systemspezifischen Schwellenwert.

Bei den genannten Temperaturdetektorelementen, den Temperaturfühlern, wird die Überlast des Motors durch die Widerstandsänderung der Temperaturdetektorelemente innerhalb vordefinierter Wertebereiche ausgewertet. Dagegen trennt ein sogenanntes Thermo-Click-Element in seinem üblichen Anwendungsgebiet bei Erreichen des Temperaturschwellwerts den Stromkreis durch eine Motorwicklung.

Temperaturfühler werden dagegen mittels einer Schutzschaltung ausgewertet, die im Wesentlichen den elektrischen Widerstand der betreffenden Temperaturdetektorelemente bestimmt, und ein Meldungssignal an einen Schalter, an eine Auswerteschaltung oder dergleichen ausgibt, wodurch z. B. ein Abschalten des Gerätes ausgelöst bzw. eine sonstige vorbestimmte Funktion gestartet wird, wenn abhängig von der gemessenen Temperatur eine thermische Überlast erkannt wird. Bei größeren Wicklungsströmen schaltet dabei das Sensorelement oder der Temperaturwächter nicht direkt den Wicklungsstrom, sondern wirkt auf die Stromversorgung oder die Ansteuerung der Leistungsendstufe.

Aus der EP 2535993 A1 ist eine Ansteuerschaltung für einen kollektorlosen, elektronisch kommutierten Gleichstrom-Motor, d. h. für einen so genannten EC-Motor mit einer an einer Versorgungsgleichspannung liegenden Halbleiter-Endstufe bekannt, die von einer elektronischen Kommutierungssteuerung über eine Treiberstufe zum zeitlich versetzten Ansteuern von Statorwicklungen des Motors zwecks Erzeugung eines magnetischen Drehfeldes für einen Rotor in Abhängigkeit von der Rotor-Drehstellung angesteuert wird.

Aus der KR 2012 0066510 A ist eine Vorrichtung zum Detektieren eines Temperaturanstiegs ausgebildet mit wenigstens einer Spule , wobei die Spule aus einem Formgedächtniswerkstoff mit wenigstens zwei unterschiedlichen temperaturabhängigen stabilen Zustände hergestellt ist und wobei bei Unter- bzw. Überschreiten einer bestimmten Temperatur, die Spule von dem einen in den jeweils anderen stabilen Zustand wechselt.

JP S61 148804 A beschreibt zwei Schaltkreise, die jeder eine aus Formgedächtniswerkstoff hergestellter Spule formt, wenn die Temperatur eine Schwelltemperatur überschreit. Über diese Schwelltemperatur sind die zwei Schaltkreise elektromagnetisch verbunden, und Signale können von einem Schaltkreis zu dem anderen übertragen werden.

US 9 618 396 B1 beschreibt einen Temperatursensor, der die Temperaturabhängige Schwingfrequenz eines thermomagnetischen Resonators benutzt. Eine vorbestimmte Beziehung zwischen der temperaturabhängigen Resonanzfrequenz und der Temperatur in einem Bereich zwischen einem maximalen magnetischen Permeabilitätswert und einer Curie-Temperatur liefert die Temperaturmessung.

Solche EC-Motoren müssen entsprechend gültiger nationaler und internationaler Normbestimmungen vor Überhitzungen im Falle von abnormalen Betriebssituationen geschützt werden.

Die in der Praxis bisher eingesetzten Verfahren haben nahezu alle einen systemspezifischen Nachteil aufgrund der spezifischen Lösung, die man verwendet. Einerseits gibt es Platzprobleme, um die Sensoren unter zu bringen. Andererseits bedarf es zusätzlicher kostenintensiver Baugruppen und Montagen, um die jeweilige Temperaturüberwachung in dem Motor zu implementieren.

Ferner gibt es Probleme, die es in der Praxis aufgrund eines schnellen Temperaturanstieges zu berücksichtigen gibt. So kann es z. B. im Falle einer Rotorblockierung des Motors abhängig von der Wicklungsauslegung zu schnellen Wicklungstemperaturanstiegen kommen. In der Folge treten unzulässig hohe Wicklungstemperaturen auf, die aber auf Grund der trägen Temperatursensoren nicht rechtzeitig die Abschaltung der Bestromung des Motors bewirkt, da das Ansprechverhalten dafür zu langsam ist.

Der vorliegenden Erfindung liegt demnach die Aufgabe zu Grunde, eine Vorrichtung zu schaffen, die eine erhöhte Betriebssicherheit zur Vermeidung von Motor-Überhitzungen gewährleistet und zuverlässig einen Temperaturanstieg insbesondere oberhalb einer zulässigen Grenztemperatur erfasst und den Motor vor einer Überhitzung schützt.

Diese Aufgabe wird durch die Merkmalskombination gemäß Anspruch 1 sowie Anspruch 7 und Anspruch 9 gelöst.

Erfindungsgemäß wird hierzu eine Vorrichtung zum Detektieren eines Temperaturanstiegs eines EC-Motors vorgeschlagen, ausgebildet mit einem elektrischen Schwingkreis, mit wenigstens einer Spule L und einer Einrichtung zum Messen der Schwingfrequenz ω des Schwingkreises, wobei die Vorrichtung ausgebildet ist, um an den Klemmen des EC-Motors angeschlossen zu werden und die Spule L des Schwingkreises aus einem Formgedächtniswerksstoff mit wenigstens zwei unterschiedlichen temperaturabhängigen stabilen Zuständen Z1, Z2 hergestellt ist und wobei bei Unter- bzw. Überschreiten einer bestimmten Temperatur, die Spule L von dem einen in den jeweils anderen stabilen Zustand bzw. sich kontinuierlich, insbesondere linear mit der Temperatur ändernd in einen anderen Zustand wechselt und sich dadurch die Schwingfrequenz ω des Schwingkreises 10 detektierbar ändert.

In einer vorteilhaften Ausgestaltung der Erfindung ist vorgesehen, dass der Formgedächtniswerksstoff eine Metalllegierung ist, die bis zu einer Temperaturgrenze TG in einer ersten Kristallstrukturen existiert und bei Überschreiten der Temperaturgrenze TG seine Kristallstruktur ändert

Weiter vorteilhaft ist es, wenn der Werkstoff der Spule eine Nickel-Titan-Legierung ist, wobei es sich als besonders vorteilhaft erwiesen hat, wenn der Werkstoff der Spule Nitinol aufweist oder aus Nitinol besteht.

In einer weiteren vorteilhaften Ausgestaltung der Erfindung ist vorgesehen, dass der Übergang von dem einen Zustand in den jeweils anderen Zustand reversibel erfolgt, indem ein Werkstoff gewählt wird, der je nach Richtung der Temperaturänderung in den jeweils einen oder jeweils anderen Zustand wechselt.

Durch geeignete Positionierung im Motorbauraum, lässt sich die Messgenauigkeit noch verbessern und insbesondere das Ansprechverhalten auf die Temperaturveränderung optimieren. Es ist daher vorteilhaft, wenn der Schwingkreis unmittelbar in den Motorbauraum des EC-Motors hineinragt oder unmittelbar am EC-Motor angeordnet ist.

In einer weiteren vorteilhaften Ausgestaltung der Erfindung ist vorgesehen, dass ferner eine Auswerteeinrichtung vorgesehen ist, die mit Mitteln ausgebildet ist, um aus den von der Einrichtung erfassten Messgrößen aus der Veränderung der Schwingfrequenz ω des Schwingkreis eine Temperatur zu bestimmen. Die Auswerteeinheit kann dabei aus herkömmlichen im Stand der Technik verfügbaren Einheiten, wie einem Prozessor, einer Recheneinheit, Datenspeicher, Signalauswertevorrichtung etc. bestehen. Eine Auswertung kann auch über eine RFID (mittels Radiofrequenz) erfolgen. Dabei kann ein Spulenpaar verwendet werden, wobei eine Spule als Sender und eine als Empfänger dient, während die Feldkopplung zwischen den Spulen ausgewertet wird. Bei einer Temperaturänderung ändert sich die Form der Spule und demnach auch die Frequenz. Der Sender variiert demzufolge die Sendefrequenz abhängig von der Temperatur und es kann über den Resonanzeinfluss des Empfängers dessen Frequenz bestimmt werden und aus der Frequenz die Temperatur bzw. auch die Temperaturänderung ermittelt werden.

Ein weiterer Aspekt der Erfindung betrifft einen EC-Motor ausgestattet mit einer wie zuvor beschriebenen erfindungsgemäßen Vorrichtung.

Ein ebenfalls weiterer Aspekt der vorliegenden Erfindung betrifft ein Verfahren zum Detektieren einer Temperatur und insbesondere einer Temperaturerhöhung bei einem solchen EC-Motor mit den folgenden Schritten:
a. Erfassen der Veränderung der Schwingfrequenz ω des Schwingkreises,
b. Bestimmen aus den von der Einrichtung erfassten Messgrößen aus der Veränderung der Schwingfrequenz ω des Schwingkreis eine Temperatur.

Besonders vorteilhaft ist es, wenn zusätzlich eine Abschaltvorrichtung vorgesehen ist und bei einer Detektion einer bestimmten, insbesondere unzulässigen Temperatur, der Motor unmittelbar abgeschaltet wird.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt.

Es zeigt:
- Fig. 1: eine schematische Ansicht eines Ausführungsbeispiels der Erfindung in einem ersten Zustand Z1 und
- Fig. 2: eine schematische Ansicht des Ausführungsbeispiels aus Fig. 1 in einem weiten Zustand Z2.

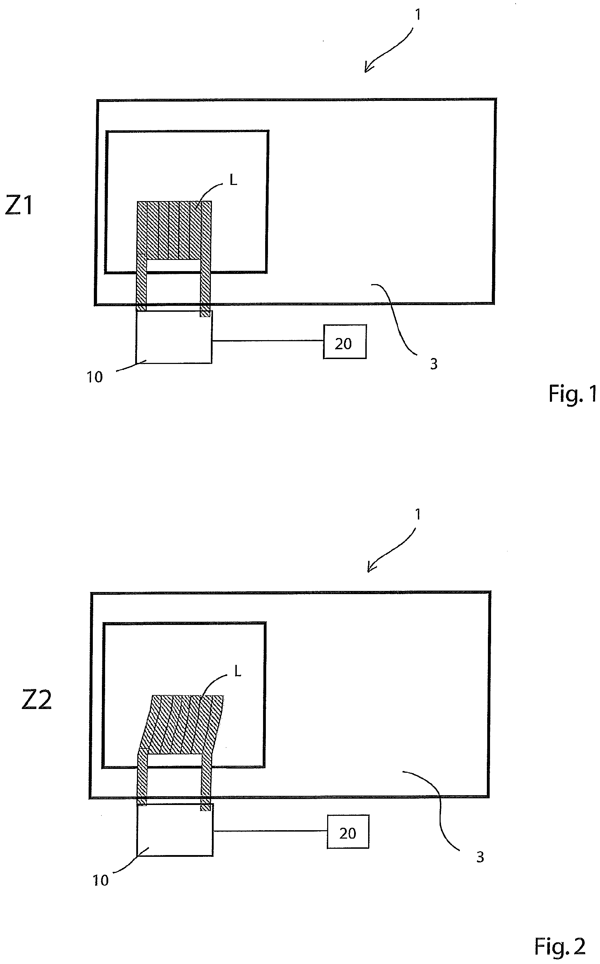

Die Erfindung wird im Folgenden mit Bezug auf die Figuren 1 und 2 näher erläutert, wobei die Fig. 1 lediglich beispielhaft schematisch ein Ausführungsbeispiel einer erfindungsgemäßen Vorrichtung 1 darstellt.

Die erfindungsgemäße Vorrichtung 1 ist dabei ausgebildet zum Detektieren eines Temperaturanstiegs eines EC-Motors 3. Hierzu ist die Vorrichtung 1 mit einem Schwingkreis 10 versehen. Der Schwingkreis 10 umfasst die gezeigte Spule L. Daneben ist eine Einrichtung 20 zum Messen der Schwingfrequenz ω des Schwingkreises 10 vorgesehen.

Die Vorrichtung 1 ist ausgebildet, um an den Klemmen des EC-Motors 3 angeschlossen zu werden. Von dem Schwingkreis 10 ist lediglich die Spule L dargestellt. Die Spule L des Schwingkreises besteht aus einem Formgedächtniswerksstoff mit wenigstens zwei unterschiedlichen temperaturabhängigen stabilen Zuständen Z1, Z2, die beispielhaft nebeneinander in den Figuren 1 und 2 dargestellt sind. In diesem Ausführungsbeispiel ist der Werkstoff der Spule Nitinol.

Beim Überschreiten einer bestimmten Temperatur, geht die Spule L von dem einen (in der oberen Ansicht gezeigten Zustand) in den jeweils anderen (in der unteren Ansicht gezeigten) stabilen Zustand über. Durch die Formänderung ändert sich die Schwingfrequenz ω des Schwingkreises.

Ferner ist schematisch dargestellt, wie der Schwingkreis 10 der Vorrichtung 1 in den Motorbauraum 7 des EC-Motors 3 hineinragt.

Neben der Einrichtung 20 zum Messen der Schwingfrequenz ω des Schwingkreises 10 ist ferner eine Auswerteeinrichtung A vorgesehen, die mit herkömmlichen Mitteln ausgebildet ist, um aus den von der Einrichtung 20 erfassten Messgrößen aus der Veränderung der Schwingfrequenz ω des Schwingkreis 10 eine Temperatur zu bestimmen.

## Patentansprüche

1. Vorrichtung (1) zum Detektieren eines Temperaturanstiegs eines EC-Motors (3) ausgebildet mit einem Schwingkreis (10), mit wenigstens einer Spule (L) und einer Einrichtung (20) zum Messen der Schwingfrequenz ω des Schwingkreises (10), wobei die Vorrichtung (1) ausgebildet ist, um an den Klemmen des EC-Motors (3) angeschlossen zu werden und die Spule (L) des Schwingkreises aus einem Formgedächtniswerksstoff mit wenigstens zwei unterschiedlichen temperaturabhängigen stabilen Zuständen (Z1, Z2) hergestellt ist und wobei bei Unter- bzw. Überschreiten einer bestimmten Temperatur, die Spule (L) von dem einen in den jeweils anderen stabilen Zustand wechselt und sich dadurch die Schwingfrequenz ω des Schwingkreises (10) ändert.

2. Vorrichtung (1) nach Anspruch 1, **dadurch gekennzeichnet, dass** das der Formgedächtniswerksstoff eine Metalllegierung ist, die bis zu einer Temperaturgrenze TG in einer ersten Kristallstrukturen existiert und bei Überschreiten der Temperaturgrenze TG seine Kristallstruktur ändert.

3. Vorrichtung (1) nach Anspruch 1 oder 2, **dadurch gekennzeichnet, dass** der Werkstoff der Spule eine Nickel-Titan-Legierung ist.

4. Vorrichtung (1) nach einem der vorhergehenden Ansprüche 1, 2 oder 3, **dadurch gekennzeichnet, dass** der Werkstoff der Spule Nitinol aufweist oder aus Nitinol besteht.

5. Vorrichtung (1) nach einem der vorhergehenden Ansprüche, **dadurch gekennzeichnet, dass** der Übergang von dem einen Zustand in den jeweils anderen Zustand reversibel erfolgt.

6. Vorrichtung (1) nach einem der vorhergehenden Ansprüche, **dadurch gekennzeichnet, dass** der Schwingkreis in den Motorbauraum des EC-Motors (3) hineinragt oder unmittelbar am EC-Motor (3) angeordnet ist.

7. EC-Motor (3) ausgestattet mit einer Vorrichtung (1) nach einem der vorhergehenden Ansprüche.

8. EC-Motor (3) nach Anspruch 7, **dadurch gekennzeichnet, dass** ferner eine Auswerteeinrichtung (A) vorgesehen ist, die mit Mitteln ausgebildet ist, um aus den von der Einrichtung (20) erfassten Messgrößen aus der Veränderung der Schwingfrequenz ω des Schwingkreis (10) eine Temperatur zu bestimmen.

9. Verfahren zum Detektieren einer Temperatur und insbesondere einer Temperaturerhöhung bei einem EC-Motor (3) gemäß Anspruch 7 oder 8 mit den folgenden Schritten:
a. Erfassen der Veränderung der Schwingfrequenz ω des Schwingkreis (10),
b. Bestimmen aus den von der Einrichtung (20) erfassten Messgrößen aus der Veränderung der Schwingfrequenz ω des Schwingkreis (10) eine Temperatur.

10. Verfahren nach Anspruch 9, wobei eine Abschaltvorrichtung vorgesehen ist und bei einer Detektion einer bestimmten insbesondere unzulässigen Temperatur, der Motor abgeschaltet wird.

## Claims

1. A device (1) for detecting a temperature increase in an EC motor (3), comprising an oscillator circuit (10) with at least one coil (L) and one device (20) for measuring the resonant frequency ω of the oscillator circuit (10), wherein the device (1) is designed to be connected to the terminals of the EC motor (3) and the coil (L) of the oscillator circuit is made of a shape memory material with at least two different temperature-dependent stable states (Z1, Z2), and wherein, when the temperature falls below or exceeds a specific value, the coil (L) changes from one stable state to the other, thereby altering the resonant frequency ω of the oscillator circuit (10).

2. The device (1) as set forth in claim 1, **characterized in that** the shape-memory material is a metal alloy which exists in a first crystal structure up to a temperature limit TG and changes its crystal structure when the temperature limit TG is exceeded.

3. The device (1) as set forth in claim 1 or 2, **characterized in that** the material of the coil is a nickel-titanium alloy.

4. The device (1) as set forth in any one of preceding claims 1, 2, or 3, **characterized in that** the material of the coil contains or consists of nitinol.

5. The device (1) as set forth in any one of the preceding claims, **characterized in that** the transition from one state to the other state is reversible.

6. The device (1) as set forth in any one of the preceding claims, **characterized in that** the oscillator circuit protrudes into the motor installation space of the EC motor (3) or is arranged directly on the EC motor (3).

7. An EC motor (3) that is equipped with a device (1) as set forth in any one of the preceding claims.

8. The EC motor (3) as set forth in claim 7, **characterized in that** an evaluation device (A) is also provided which comprises means for determining a temperature from the measured variables detected by the device (20) from the change in the resonant frequency ω of the oscillator circuit (10).

9. A method for detecting a temperature and, in particular, a temperature increase in an EC motor (3) as set forth in claim 7 or 8, with the following steps:
a. detecting the change in the resonant frequency ω of the oscillator circuit (10),
b. determining a temperature from the measured variables detected by the device (20) from the change in the resonant frequency ω of the oscillator circuit (10).

10. The method as set forth in claim 9, wherein a switch-off device is provided and the motor is switched off when a specific, in particular impermissible, temperature is detected.

## Revendications

1. Dispositif (1) de détection d'augmentation de température d'un moteur EC (3) conçu avec un circuit oscillant (10), avec au moins une bobine (L) et un appareil (20) de mesure de la fréquence d'oscillation ω du circuit oscillant (10), dans lequel le dispositif (1) est conçu pour être connecté aux bornes du moteur EC (3) et la bobine (L) du circuit oscillant est fabriquée en un matériau à mémoire de forme avec au moins deux états stables différents en fonction de la température (Z1, Z2) et dans lequel en descendant en dessous ou en passant au-dessus d'une certaine température, la bobine (L) passe respectivement d'un état stable à l'autre et la fréquence d'oscillation ω du circuit oscillant (10) change en conséquence.

2. Dispositif (1) selon la revendication 1, **caractérisé en ce que** le matériau à mémoire de forme est un alliage métallique qui existe dans une première structure cristalline jusqu'à une température limite TG et change de structure cristalline lorsque la température limite TG est dépassée.

3. Dispositif (1) selon la revendication 1 ou 2, **caractérisé en ce que** le matériau de la bobine est un alliage nickel-titane.

4. Dispositif (1) selon l'une des revendications précédentes 1, 2 ou 3, **caractérisé en ce que** le matériau de la bobine contient du nitinol ou est constitué de nitinol.

5. Dispositif (1) selon l'une des revendications précédentes, **caractérisé en ce que** le passage d'un état à l'autre état est réversible.

6. Dispositif (1) selon l'une des revendications précédentes, **caractérisé en ce que** le circuit oscillant fait saillie dans l'espace d'installation du moteur du moteur EC (3) ou est disposé directement sur le moteur EC (3).

7. Moteur EC (3) équipé d'un dispositif (1) selon l'une des revendications précédentes.

8. Moteur EC (3) selon la revendication 7, **caractérisé en ce qu'**un dispositif d'évaluation (A) est également prévu, qui est conçu avec des moyens pour déterminer une température à partir des grandeurs de mesure détectées par l'appareil (20) sur la base du changement de la fréquence d'oscillation ω du circuit oscillant (10).

9. Procédé de détection d'une température et en particulier d'une élévation de température dans un moteur EC (3) selon la revendication 7 ou 8 comprenant les étapes suivantes :
a. la détection du changement de la fréquence d'oscillation ω du circuit oscillant (10),
b. la détermination d'une température à partir des grandeurs de mesure détectées par l'appareil (20) sur la base du changement de la fréquence d'oscillation ω du circuit oscillant (10).

10. Procédé selon la revendication 9, dans lequel un dispositif d'arrêt est prévu et dans lequel la détection d'une température spécifique, en particulier intenable, provoque l'arrêt du moteur.
